# EUROPEAN PATENT SPECIFICATION

(11) **EP 3 516 652 B1**
(45) Date of publication and mention of the grant of the patent: **07.09.2022**
(21) Application number: 17778046.7
(22) Date of filing: 19.09.2017
(51) Int. Cl.: G10L 17/02, G10L 17/04, G10L 17/18, G10L 17/20

(54) **CHANNEL-COMPENSATED LOW-LEVEL FEATURES FOR SPEAKER RECOGNITION**
KANALKOMPENSIERTE LOW-LEVEL-MERKMALE ZUR SPRECHERERKENNUNG
CARACTÉRISTIQUES DE BAS NIVEAU À COMPENSATION DE CANAL POUR LA RECONNAISSANCE DU LOCUTEUR

(30) Priority: 19.09.2016 US 201662396617 P; 19.09.2016 US 201662396670 P
(43) Date of publication of application: 31.07.2019
(73) Proprietor: Pindrop Security, Inc., Atlanta, GA 30308 (US)
(72) Inventor: KHOURY, Elie, Atlanta, Georgia 30308 (US); GARLAND, Matthew, Atlanta, Georgia 30308 (US)
(74) Representative: Murgitroyd & Company
(86) International application number: PCT/US2017/052293
(87) International publication number: WO 2018/053518

(56) References cited:
- SZU-WEI FU ET AL: "SNR-Aware Convolutional Neural Network Modeling for Speech Enhancement", INTERSPEECH 2016, vol. 2016, 8 September 2016 (2016-09-08), pages 3768-3772, XP055427533, ISSN: 1990-9772, DOI: 10.21437/Interspeech.2016-211
- Sibel Yaman ET AL: "Bottleneck Features for Speaker Recognition", Proceedings of the spekaer and language recognition Workshop 2012, 28 June 2012 (2012-06-28), pages 105-108, XP055409424, Retrieved from the Internet: URL:https://pdfs.semanticscholar.org/3469/ fe6e53e65bced5736480afe34b6c16728408.pdf [retrieved on 2017-09-25]
- VARIANI EHSAN ET AL: "Deep neural networks for small footprint text-dependent speaker verification", 2014 IEEE INTERNATIONAL CONFERENCE ON ACOUSTICS, SPEECH AND SIGNAL PROCESSING (ICASSP), IEEE, 4 May 2014 (2014-05-04), pages 4052-4056, XP032617560, DOI: 10.1109/ICASSP.2014.6854363 [retrieved on 2014-07-11]

## Description

This disclosure claims domestic benefit, under 35 U.S.C. § 119, of U.S. Provisional Application No. 62/396,617 filed 19 September 2016, titled "Improvements of GMM-Based Modeling for Speaker Recognition", 62/396,670 also filed 19 September 2016, titled "Improvements of Speaker recognition in the Call Center", and 15/709,024 filed 19 September 2017, titled "Channel-Compensated Low-Level Features for Speaker Recognition".

This application is related to methods and systems for audio processing, and more particularly to audio processing for speaker identification.

### BACKGROUND

Current state-of-the art approaches to speaker recognition are based on a universal background model (UBM) estimated using either acoustic Gaussian mixture modeling (GMM) or phonetically-aware deep neural network architecture. The most successful techniques consist of adapting the UBM model to every speech utterance using the total variability paradigm. The total variability paradigm aims to extract a low-dimensional feature vector known as an "i-vector" that preserves the total information about the speaker and the channel. After applying a channel compensation technique, the resulting i-vector can be considered a voiceprint or voice signature of the speaker.

One drawback of such approaches is that, in programmatically determining or verifying the identity of a speaker by way of a speech signal, a speaker recognition system may encounter a variety of elements that can corrupt the signal. This channel variability poses a real problem to conventional speaker recognition systems. A telephone user's environment and equipment, for example, can vary from one call to the next. Moreover, telecommunications equipment relaying a call can vary even during the call.

In a conventional speaker recognition system a speech signal is received and evaluated against a previously enrolled model. That model, however, typically is limited to a specific noise profile including particular noise types such as babble, ambient or HVAC (heat, ventilation and air conditioning) and/or a low signal-to-noise ratio (SNR) that can each contribute to deteriorating the quality of either the enrolled model or the prediction of the recognition sample. Speech babble, in particular, has been recognized in the industry as one of the most challenging noise interference due to its speaker/speech like characteristics. Reverberation characteristics including high time-to-reverberation at 60 dB (T60) and low direct-to-reverberation ratio (DRR) also adversely affect the quality of a speaker recognition system. Additionally, an acquisition device may introduce audio artifacts that are often ignored although speaker enrollment may use one acquisition device while testing may utilize a different acquisition device. Finally, the quality of transcoding technique(s) and bit rate are important factors that may reduce effectiveness of a voice biometric system.

Conventionally, channel compensation has been approached at different levels that follow spectral feature extraction, by either applying feature normalization, or by including it in the modeling or scoring tools such as Nuisance Attribute Projection (NAP) (*see* Solomonoff, et al., "Nuisance attribute projection", Speech Communication, 2007) or Probabilistic Linear Discriminant Analysis (PLDA) (*see* Prince, et al., "Probabilistic Linear Discriminant Analysis for Inferences about Identity", IEEE ICCV, 2007).

A few research attempts have looked at extracting channel-robust low-level features for the task of speaker recognition. (*See*, e.g., Richardson et al. "Channel compensation for speaker recognition using MAP adapted PLDA and denoising DNNs", Proc. Speaker Lang. Recognit. Workshop, 2016; *and* Richardson, et al. "Speaker Recognition Using Real vs Synthetic Parallel Data for DNN Channel Compensation", INTERSPEECH, 2016. ) These attempts employ a denoising deep neural network (DNN) system that takes as input corrupted Mel frequency cepstrum coefficients (MFCCs) and provides as output a cleaner version of these MFCCs. However, they do not fully explore the denoising DNN by applying it directly to the audio signal. A significant portion of relevant speaker-specific information is already lost after MFCC extraction of the corrupted signal, and it is difficult to fully cover this information by the DNN. The conference paper Szu-Wei Fu et al. "SNR-Aware Convolutional Neural Network Modeling for Speech Enhancement" discloses relevant background art.

Other conventional methods explore using phonetically-aware features that are originally trained for automatic speech recognition (ASR) tasks to discriminate between different senones. *(See* Zhang et al. "Extracting Deep Neural Network Bottleneck Features using Low-rank Matrix Factorization", IEEE ICASSP, 2014). Combining those features with MFCCs may increase performance. However, these features are computationally expensive to produce: they depend on a heavy DNN-based automatic speech recognition (ASR) system trained with thousands of senones on the output layer. Additionally, this ASR system requires a significant amount of manually transcribed audio data for DNN training and time alignment. Moreover, the resulting speaker recognition will work only on the language that the ASR system is trained on, and thus cannot generalize well to other languages.

### SUMMARY

The present invention is defined by the appended claims. The present invention is directed to a system that utilizes novel low-level acoustic features for the tasks of verifying a speaker's identity and/or identifying a speaker among a closed set of known speakers under different channel nuisance factors.

The present disclosure applies DNN directly on the raw audio signal and uses progressive neural networks instead of the simple fully-connected neural network used conventionally. The resulting neural network is robust to not only channel nuisance, but also to distinguish between speakers. Furthermore, the disclosed augmented speech signal includes transcoding artifacts that are missing in conventional systems. This additional treatment allows the disclosed speaker recognition system to cover a wide range of applications beyond the telephony channel including, for example, VoIP interactions and Internet of Things (IoT) voice-enabled devices such as AMAZON ECHO and GOOGLE HOME.

In an exemplary embodiment, a system for generating channel-compensated low level features for speaker recognition includes an acoustic channel simulator, a first feed forward convolutional neural network (CNN), a speech analyzer and a loss function processor. The acoustic channel simulator receives a recognition speech signal (e.g., an utterance captured by a microphone), degrades the recognition speech signal to include characteristics of an audio channel, and outputs a degraded speech signal. The first CNN operates in two modes. In a training mode the first CNN receives the degraded speech signal, and computes from the degraded speech signal a plurality of channel-compensated low-level features. In a test and enrollment mode, the CNN receives the recognition speech signal and calculates from it a set of channel-compensated, low-level features. The speech signal analyzer extracts features of the recognition speech signal for calculation of loss in the training mode. The loss function processor calculates the loss based on the features from the speech analyzer and the channel-compensated low-level features from the first feed forward convolutional neural network, and if the calculated loss is greater than the threshold loss, one or more connection weights of the first CNN are modified based on the computed loss. If, however, the calculated loss is less than or equal to the threshold loss, the training mode is terminated.

In accord with exemplary embodiments, the acoustic channel simulator includes one or more of an environmental noise simulator, a reverberation simulator, an audio acquisition device characteristic simulator, and a transcoding noise simulator. In accordance with some embodiments, each of these simulators may be selectably or programmatically configurable to perform a portion of said degradation of the recognition speech signal. In accordance with other exemplary embodiments the acoustic channel simulator includes each of an environmental noise simulator, a reverberation simulator, an audio acquisition device characteristic simulator, and a transcoding noise simulator.

In accord with exemplary embodiments, the environmental noise simulator introduces to the recognition speech signal at least one environmental noise type selected from a plurality of environmental noise types.

In accord with exemplary embodiments, the environmental noise simulator introduces the selected environmental noise type at a signal-to-noise ratio (SNR) selected from a plurality of signal-to-noise ratios (SNRs).

In accord with exemplary embodiments, the reverberation simulator simulates reverberation according to a direct-to-reverberation ratio (DRR) selected from a plurality of DRRs. Each DRR in the plurality of DRRs may have a corresponding time-to-reverberation at 60dB (T60).

In accord with exemplary embodiments, the audio acquisition device characteristic simulator introduces audio characteristics of an audio acquisition device selectable from a plurality of stored audio acquisition device profiles each having one or more selectable audio characteristics.

In accord with exemplary embodiments, each audio acquisition device profile of the plurality of stored audio acquisition device profiles may include at least one of: a frequency/equalization characteristic, an amplitude characteristic, a filtering characteristic, an electrical noise characteristic, and a physical noise characteristic.

In accord with exemplary embodiments, the transcoding noise simulator selectively adds audio channel transcoding characteristics selectable from a plurality of stored transcoding characteristic profiles.

In accord with exemplary embodiments, each transcoding characteristic profile may include at least one of a quantization error noise characteristic, a sampling rate audio artifact characteristic, and a data compression audio artifact characteristic.

In accord with exemplary embodiments, the features from the speech signal analyzer and the channel-compensated features from the first CNN each include a corresponding at least one of Mel-frequency cepstrum coefficients (MFCC), low-frequency cepstrum coefficients (LFCC), and perceptual linear prediction (PLP) coefficients. That is, use by the loss function processor, the channel compensated features and the features from the speech signal analyzer are of similar type (e.g., both are MFCC).

In accord with exemplary embodiments, the system may further include a second, speaker-aware, CNN that, in the test and enrollment mode receives the plurality of channel-compensated features from the first CNN and extracts from the channel-compensated features a plurality of speaker-aware bottleneck features.

In accord with exemplary embodiments, the second CNN includes a plurality of convolutional layers and a bottleneck layer. The bottleneck layer outputs the speaker-aware bottleneck features. The second CNN may also include a plurality of fully connected layers, an output layer, and a second loss function processor each used during training of the second CNN At least one of the fully connected layers may employ a dropout technique to avoid overfitting, with a dropout ratio for the dropout technique at about 30%. The second CNN may also include a max pooling layer configured to pool over a time axis.

In accord with exemplary embodiments, the second CNN may take as input at least one set of other features side by side with the channel-compensated features, the at least one set of other features being extracted from the speech signal.

In another exemplary embodiment, a method of training a deep neural network (DNN) with channel-compensated low-level features includes receiving a recognition speech signal; degrading the recognition speech signal to produce a channel-compensated speech signal; extracting, using a first feed forward convolutional neural network, a plurality of low-level features from the channel-compensated speech signal; calculating a loss result using the channel-compensated low-level features extracted from the channel-compensated speech signal and hand-crafted features extracted from the recognition speech signal; and modifying connection weights of the first feed forward convolutional neural network if the computed loss is greater than a predetermined threshold value.

Embodiments of the present invention can be used to perform a speaker verification task in which the user inputs a self-identification, and a recognition speech signal is used to confirm that a stored identity of the user is the same as the self-identification. In another embodiment, the present invention can be used to perform a speaker identification task in which the recognition speech signal is used to identify the user from a plurality of potential identities stored in association with respective speech samples. The aforementioned embodiments are not mutually exclusive, and the same low-level acoustic features may be used to perform both tasks.

The low-level features disclosed herein are robust against various noise types and levels, reverberation, and acoustic artifacts resulting from variations in microphone acquisition and transcoding systems. Those features are extracted directly from the audio signal and preserve relevant acoustic information about the speaker. The inventive contributions are many and include at least the following features: 1) an audio channel simulator for augmentation of speech data to include a variety of channel noise and artifacts, 2) derivation of channel-compensated features using a CNN (CNN), 3) an additional CNN model employed to generate channel-compensated features that are trained to increase inter-speaker variance and reduce intra-speaker variance, and 4) use of a multi-input DNN for increased accuracy.

While multiple embodiments are disclosed, still other embodiments will become apparent to those skilled in the art from the following detailed description, which shows and describes illustrative embodiments of the invention. As will be realized, the invention is capable of modifications in various aspects, all without departing from the scope of the present invention. Accordingly, the drawings and detailed description are to be regarded as illustrative in nature and not restrictive.

### FIGURES

**FIG. 1** is a block diagram illustrating a system for performing speaker recognition according to an exemplary embodiment of the present disclosure.
**FIG. 2A** illustrates a general structure of a deep neural network front end in a training mode, according to exemplary embodiments of the present disclosure.
**FIG. 2B** illustrates a general structure of a deep neural network for use in testing and enrollment for a particular user, according to exemplary embodiments of the present disclosure.
**FIG. 2C** illustrates a general structure of a deep neural network for use in testing and enrollment for a particular user, according to exemplary embodiments of the present disclosure.
**FIG. 3** is a block diagram illustrating elements of an acoustic channel simulator according to exemplary embodiments of the present disclosure.
**FIG. 4** is a flowchart for a method of training a channel-compensated feed forward convolutional neural network according to exemplary embodiments of the present disclosure.
**FIG. 5** is a flowchart adding channel noise in the method of FIG. 4, according to exemplary embodiments of the present disclosure.
**FIG. 6** is a block diagram of an acoustic features creating system employing a channel compensated feature generator and a second neural network for bottleneck features, according to exemplary embodiments of the present disclosure.
**FIG. 7** is a block diagram of a speaker recognition system employing a plurality of feature generators, including a channel-compensated feature generator with the second neural network of **FIG. 6**, according to exemplary embodiments of the present disclosure.

The above figures may depict exemplary configurations for an apparatus of the disclosure, which is done to aid in understanding the features and functionality that can be included in the housings described herein. The apparatus is not restricted to the illustrated architectures or configurations, but can be implemented using a variety of alternative architectures and configurations. Additionally, although the apparatus is described above in terms of various exemplary embodiments and implementations, it should be understood that the various features and functionality described in one or more of the individual embodiments with which they are described, but instead can be applied, alone or in some combination, to one or more of the other embodiments of the disclosure, whether or not such embodiments are described and whether or not such features are presented as being a part of a described embodiment. Thus the breadth and scope of the present disclosure, especially in any following claims, should not be limited by any of the above-described exemplary embodiments.

### DETAILED DESCRIPTION

The detailed description set forth below in connection with the appended drawings is intended as a description of exemplary embodiments of the present disclosure and is not intended to represent the only embodiments in which the present disclosure can be practiced. The term "exemplary" used throughout this description means "serving as an example, instance, or illustration," and should not necessarily be construed as preferred or advantageous over other embodiments, whether labeled "exemplary" or otherwise. The detailed description includes specific details for the purpose of providing a thorough understanding of the embodiments of the disclosure. It will be apparent to those skilled in the art that the embodiments of the disclosure may be practiced without these specific details. In some instances, well-known structures and devices may be shown in block diagram form in order to avoid obscuring the novelty of the exemplary embodiments presented herein.

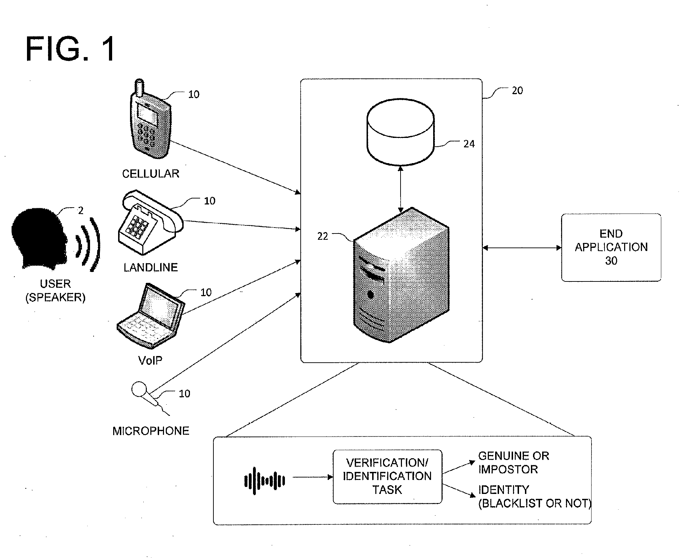

**FIG. 1** is a block diagram that illustrates a system for performing speaker recognition according to an exemplary embodiment of the present invention. According to **FIG. 1**, a user or speaker **2** may speak an utterance into input device **10** containing an audio acquisition device, such as a microphone, for converting the uttered sound into an electrical signal. As particularly shown in **FIG. 1**, the input device **10** may be a device capable of telecommunications, such as a telephone (either cellular or landline) or a computer or other processor based device capable of voice over internet (VoIP) communications. In fact, it is contemplated that the present invention could be utilized specifically in applications to protect against, for example, telephone fraud, e.g., verifying that the caller is whom he/she claims to be, or detecting the caller's identity as somebody on a "blacklist" or "blocked callers list." Although it is contemplated that the input device **10** into which the recognition speech signal is spoken may be a telecommunication device (e.g., phone), this need not be the case. For instance, the input device **10** may simply be a microphone located in close proximity to the speaker recognition subsystem **20**. In other embodiments, the input device **10** may be located remotely with respect to the speaker recognition subsystem.

According to **FIG. 1**, the user's utterance, which is used to perform speaker identification, will be referred to in this specification as the "recognition speech signal." The recognition speech signal may be electrically transmitted from the input device **10** to a speaker recognition subsystem **20**.

The speaker recognition subsystem **20** of **FIG. 1** may include a computing system **22**, which can be a server or a general-purpose personal computer (PC), programmed to model a deep neural network. It should be noted, however, that the computing system **22** is not strictly limited to a single device, but instead may comprise multiple computers and/or devices working in cooperation to perform the operations described in this specification (e.g., training of the DNN may occur in one computing device, while the actual verification/identification task is performed in another). While single or multiple central processing units (CPU) may be used as a computing device both for training and testing, graphics processing units (GPU's) may also be used. For instance, the use of a GPU in the computing system **22** may help reduce the computational cost, especially during training. Furthermore, the computing system may be implemented in a cloud computing environment using a network of remote servers.

As shown in **FIG. 1**, the speaker recognition subsystem **20** may also include a memory device **24** used for training the DNN in exemplary embodiments. Particularly, this memory device **24** may contain a plurality of raw and/or sampled speech signals (or "speech samples") from multiple users or speakers, as well as a plurality of registered voiceprints (or "speaker models") obtained for users who have been "enrolled" into the speaker registration subsystem **20**.

In some embodiments, the memory device **24** may include two different datasets respectively corresponding to the respective training and testing functions to be performed by the DNN. For example, to conduct training the memory device **24** may contain a dataset including at least two speech samples obtained as actual utterances from each of multiple speakers. The speakers need not be enrollees or intended enrollees. Moreover, the utterances need not be limited to a particular language. For use with the system disclosed herein, these speech samples for training may be "clean", i.e., including little environmental noise, device acquisition noise or other nuisance characteristics.

The memory device **24** may include another dataset to perform the "testing" function, whereby the DNN performs actual speaker recognition by positively verifying or identifying a user. To perform this function, the dataset need only include one positive speech sample of the particular user, which may be obtained as a result of "enrolling" the user into the speaker recognition subsystem **22** (which will be described in more detail below). Further, this dataset may include one or more registered voiceprints, corresponding to each user who can be verified and/or identified by the system.

Referring again to **FIG**. **1**, the results of the speaker recognition analysis can be used by an end application **30** that needs to authenticate the caller (i.e., user), i.e., verifying that the caller is whom he/she claims to be by using the testing functions described herein. As an alternative, the end application **30** may need to identify any caller who is on a predefined list (e.g., blacklist or blocked callers). This can help detect a malicious caller who spoofs a telephone number to evade detection by calling line identification (CLID) (sometimes referred to as "Caller ID"). However, even though the present invention can be used by applications **30** designed to filter out malicious callers, the present invention is not limited to those types of applications **30**. For instance, the present invention can be advantageously used in other applications **30**, e.g., where voice biometrics are used to unlock access to a room, resource, etc. Furthermore, the end applications **30** may be hosted on a computing system as part of computing system **20** itself or hosted on a separate computing system similar to the one described above for computing system **20**. The end application **30** may be also implemented on a (e.g., remote) terminal with the computing system **20** acting as a server. As another specific example, the end application **30** may be hosted on a mobile device such as a smart phone that interacts with computing system **20** to perform authentication using the testing functions described herein.

It should be noted that various modifications can be made to the system illustrated in **FIG. 1**. For instance, the input device **10** may transmit the recognition speech signal directly to the end application **30**, which in turn relays the recognition speech signal to the speaker recognition subsystem **20**. In this case, the end application **30** may also receive some form of input from the user representing a self-identification. For instance, in case of performing a speaker identification task, the end application **30** may request the user to identify him or herself (either audibly or by other forms of input), and send both the recognition speech signal and the user's alleged identity to the speech recognition subsystem **20** for authentication. In other cases, the self-identification of the user may consist of the user's alleged telephone number, as obtained by CLID. Furthermore, there is no limitation in regard to the respective locations of the various elements illustrated in **FIG. 1**. In certain situations, the end application **30** may be remote from the user, thus requiring the use of telecommunications for the user to interact with the end application **30**. Alternatively, the user (and the input device **10**) may be in close proximity to the end application **30** at the time of use, e.g., if the application **30** controls a voice-activated security gate, etc.

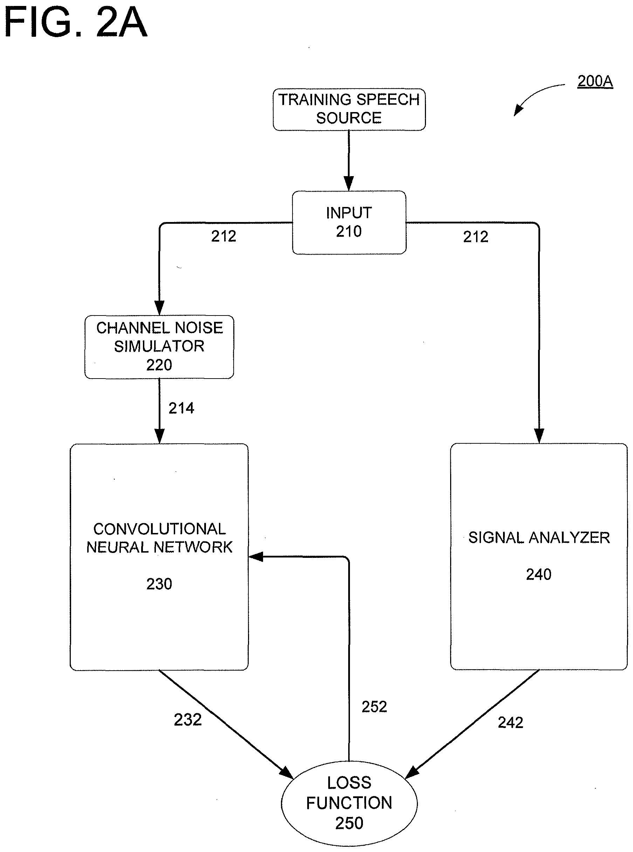

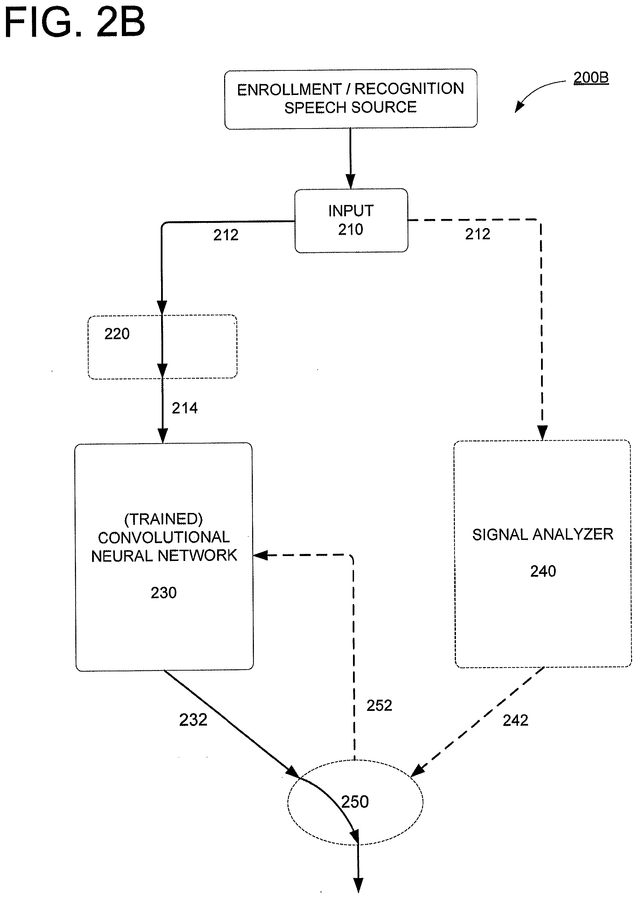

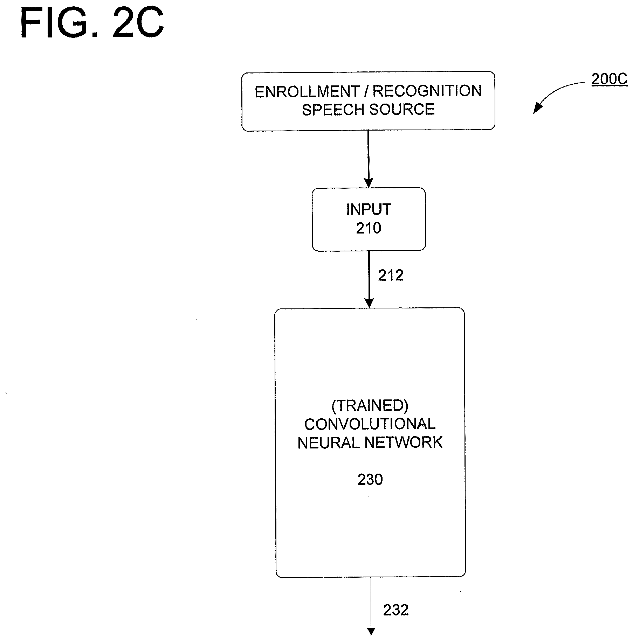

Channel and background noise variability poses a real problem for a speaker recognition system, especially when there is channel mismatch between enrollment and testing samples. **FIGS. 2A-2C** illustrate a system **200A** for training (**FIG. 2A**) and using (**FIGs. 2B****,** **2C**) a CNN in order to reduce this channel mismatch due to channel nuisance factors, thus improving the accuracy of conventional and novel speaker recognition systems.

The inventors have recognized that conventional speaker recognition systems are subject to verification/identification errors when a recognition speech signal for test significantly differs from an enrolled speech sample for the same speaker. For example, the recognition speech signal may include channel nuisance factors that were not significantly present in the speech signal used for enrolling that speaker. More specifically, at enrollment the speaker's utterance may be acquired relatively free of channel nuisance factors due to use of a high-quality microphone in a noise-free environment, with no electrical noise or interference in the electrical path from the microphone to recording media, and no transcoding of the signal. Conversely, at test time the speaker could be in a noisy restaurant, speaking into a low-quality mobile phone subject to transcoding noise and electrical interference. The added channel nuisance factors may render the resulting recognition speech signal, and any features extracted therefrom, too different from the enrollment speech signal. This difference can result in the verification/identification errors. **FIGs. 2A-2C** illustrate a front-end system for use in the speech recognition subsystem **20**, which is directed to immunizing the speech recognition subsystem against such channel nuisance factors.

The training system **200A** in **FIG. 2A** includes an input **210**, an acoustic channel simulator (also referenced as a channel-compensation device or function) **220**, a feed forward convolutional neural network (CNN) **230**, a system analyzer **240** for extracting handcrafted features, and a loss function **250**. A general overview of the elements of the training system **200A** is provided here, followed by details of each element. The input **210** receives a speaker utterance, e.g., a pre-recorded audio signal or an audio signal received from a microphone. The input device **210** may sample the audio signal to produce a recognition speech signal **212**. The recognition speech signal **212** is provided to both the acoustic channel simulator **220** and to the system analyzer **240**. The acoustic channel simulator **220** processes the recognition speech signal **212** and provides to the CNN **230** a degraded speech signal **214**. The CNN **230** is configured to provide features (coefficients) **232** corresponding to the recognition speech signal. In parallel, the signal analyzer **240** extracts handcrafted acoustic features **242** from the recognition speech signal **212**. The loss function **250** utilizes both the features **232** from the CNN **230** and the handcrafted acoustic features **242** from the signal analyzer **240** to produce a loss result **252** and compare the loss result to a predetermined threshold. If the loss result is greater than the predetermined threshold **T**, the loss result is used to modify connections within the CNN **230**, and another recognition speech signal or utterance is processed to further train the CNN **230**. Otherwise, if the loss result is less than or equal to the predetermined threshold **T**, the CNN **230** is considered trained, and the CNN **230** may then be used for providing channel-compensated features to the speaker recognition subsystem **20**. (*See* **FIG. 2B**, discussed in detail below.)

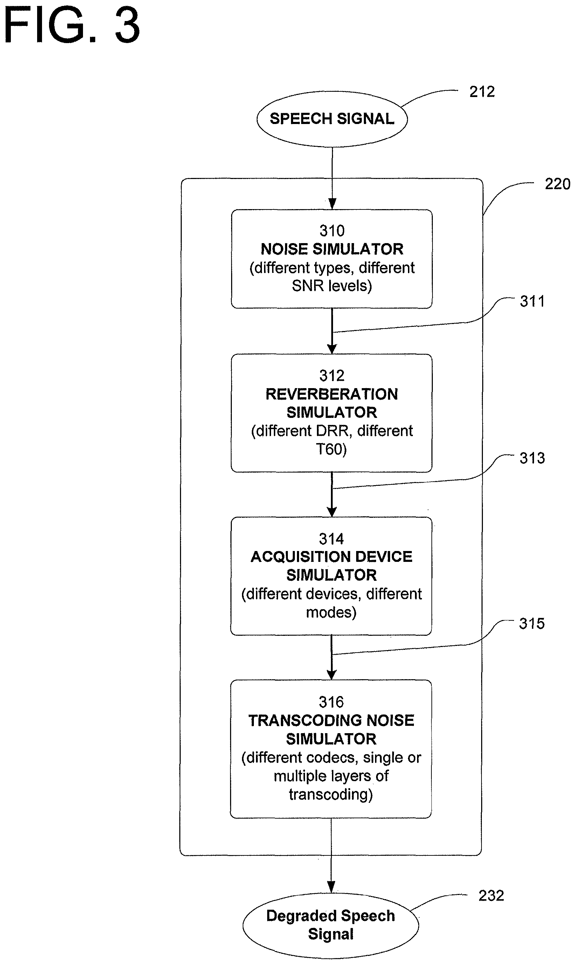

Turning to **FIG. 3**, the acoustic channel simulator **220** includes one or more nuisance noise simulators, including a noise simulator **310**, a reverberation simulator **312**, an acquisition device simulator **314** and/or a transcoding noise simulator **316**. Each of these simulators is discussed in turn below, and each configurably modifies the recognition speech signal **212** to produce the degraded speech signal **214**. The recognition speech signal **212** may be sequentially modified by each of the nuisance noise simulators in an order typical of a real-world example such as the sequential order shown in Fig. 3 and further described below. For example, an utterance by a speaker in a noisy environment would be captured with the direct environmental noises and the reflections (or reverberation) thereof. The acquisition device (e.g., microphone) would then add its characteristics, followed by any transcoding noise of the channel. It will be appreciated by those having skill in the art that different audio capturing circumstances may include a subset of nuisance factors. Thus the acoustic channel simulator **220** may be configured to use a subset of nuisance noise simulators and/or to include affects from each nuisance noise simulator at variable levels.

The noise simulator **310** may add one or more kinds of environmental or background noise to the recognition speech signal **212**. The types of noise may include babble, ambient, and/or HVAC noises. However, additional or alternative types of noise may be added to the signal. Each type of environmental noise may be included at a selectable different level. In some embodiments the environmental noise may be added at a level in relation to the amplitude of the recognition speech signal **212**. In a non-limiting example, any of five signal-to-noise ratio (SNR) levels may be selected: 0dB, 5dB, 10dB, 20dB and 30dB. In other embodiments, the selected noise type(s) may be added at a specified amplitude regardless of the amplitude of the recognition speech signal. In some embodiments, noise type, level, SNR or other environmental noise characteristics may be varied according to a predetermined array of values. Alternatively, each value may be configured across a continuous range of levels, SNRs, etc. to best compensate for the most typical environments encountered for a particular application. In some exemplary embodiments, sets of noise types, levels, SNRs, etc., may be included in one or more environment profiles stored in a memory (e.g., memory **24**), and the noise simulator **310** may be iteratively configured according to the one or more environment profiles, merged versions of two or more environment profiles, or individual characteristics within one or more of the environment profiles. In some embodiments, one or more noise types may be added from a previously stored audio sample, while in other embodiments, one or more noise types may be synthesized, e.g., by FM synthesis. In experiments, the inventors mixed the recognition speech signal **212** with real audio noise while controlling the noise level to simulate a target SNR Some noise types, such as fan or ambient noise, are constant (stationary) while others, such as babble, are relatively random in frequency, timing, and amplitude. The different types of noise may thus be added over an entire recognition speech signal **212**, while others may be added randomly or periodically to selected regions of the recognition speech signal **212**. After adding the one or more kinds of environmental and/or background noise to the recognition speech signal **212** the noise simulator **310** outputs a resulting first intermediate speech signal **311**, passed to the reverberation simulator **312**.

The reverberation simulator **312** modifies the first intermediate speech signal **311** to include a reverberation of first intermediate speech signal, including the utterance and the environmental noise provided by the noise simulator **310**. As some environments include a different amount of reverberation for different sources of sound, in some embodiments the reverberation simulator **312** may be configured to add reverberation of the utterance independent from addition of reverberation of environmental noise. In still other embodiments, each type of noise added by the noise simulator **310** may be independently processed by the reverberation simulator **312** to add a different level of reverberation. The amount and type of reverberation in real world settings is dependent on room size, microphone placement and speaker position with respect to the room and microphone. Accordingly, the reverberation simulator may be configured to simulate multiple rooms and microphone setups. For example, the reverberation simulator may choose from (or cycle through) 8 different room sizes and 3 microphone setups, for 24 different variations. In some embodiments, room size and microphone placement may be configured along a continuous range of sizes and placements in order to best compensate for the most typical settings encountered for a particular application. The simulated reverberation may be configured according to a direct-to-reverberation ratio (DRR) selected from a set of DRRs, and each DRR may have a corresponding time-to-reverberation at 60dB (T60). The reverberation simulator **312** outputs a resultant second intermediate speech signal **313** to the acquisition device simulator **314**.

The acquisition device simulator **314** may be used to simulate audio artifacts and characteristics of a variety of microphones used for acquisition of a recognition speech signal **212**. As noted above speaker recognition subsystem **20** may receive recognition speech signals **212** from various telephones, computers, and microphones **10**. Each acquisition device **10** may affect the quality of the recognition speech signal **212** in a different way, some enhancing or decreasing amplitude of particular frequencies, truncating the frequency range of the original utterance, some adding electrical noise, etc. The acquisition device simulator thus selectably or sequentially adds characteristics duplicating, or at least approximating common sets of acquisition device characteristics. For example, nuisance factors typical of most-popular phone types (e.g., APPLE IPHONE and SAMSUNG GALAXY) may be simulated by the acquisition device simulator.

The acquisition device simulator **314** may include a memory device or access to a shared memory device (e.g., memory **24**) that stores audio acquisition device profiles. Each audio acquisition device profile may include one or more audio characteristics such as those mentioned in the previous paragraph, and which may be selectable and/or configurable. For instance, each audio acquisition device profile may include one or more of a frequency/equalization characteristic, an amplitude characteristic, a filtering characteristic, an electrical noise characteristic, and a physical noise characteristic. In some embodiments, each audio acquisition device profile may correspond to a particular audio acquisition device (e.g., a particular phone model). Alternatively, as with the channel noise simulator **310** and the reverberation noise simulator **312**, in some embodiments each audio characteristic of an acquisition device may be selected from a predetermined set of audio characteristics or varied across a continuous range to provide a variety of audio characteristics during training iterations. For example, one or more of filter settings, amplitude level, equalization electrical noise level, etc. may be varied per training iteration. That is, the acquisition device simulator **314** may choose from (or cycle through) an array of values for each acquisition device characteristic, or may choose from (or cycle through) a set of audio acquisition device profiles. In some embodiments, acquisition device characteristics may be synthesized, while in some embodiments acquisition device characteristics may be stored in memory (e.g., memory **24**) as an audio sample. The output of the acquisition device simulator **314** is a third intermediate speech signal **315** that is passed to the transcoding noise simulator **316**.

In the transcoding noise simulator **316**, sets of audio encoding techniques are applied to the third intermediate speech signal **315** to simulate the audio effects typically added in the transcoding of an audio signal. Transcoding varies depending on application, and may include companding (dynamic range compression of the signal to permit communication via channel having limited dynamic range and expansion at the receiving end) and/or speech audio coding (e.g., data compression) used in mobile or Voice over IP (VoIP) devices. In some embodiments, sixteen different audio encoding techniques may be selectively implemented: four companding codecs (e.g., G.711 µ-law, G.711 A-law), seven mobile codecs (e.g. AMR narrow-band, AMR wide-band (G.722.2)), and five VoIP codecs (e.g. iLBC, Speex). In some instances plural audio encoding techniques may be applied simultaneously (or serially) to the same third intermediate speech signal **315** to simulate instances where a recognition speech signal **212** may be transcoded multiple times along its route. Different audio coding techniques or representative audio characteristics thereof may be stored in respective transcoding characteristic profiles. In some embodiments, the characteristic profiles may include a quantization error noise characteristic, a sampling rate audio artifact characteristic, and/or a data compression audio artifact characteristic. The transcoding noise simulator **316** may choose from (or cycle through) an array of values for each audio encoding technique, or may choose from (or cycle through) the transcoding characteristic profiles. In some embodiments, the third intermediate speech signal may be subjected to actual transcoding according to one or more of the audio transcoding techniques to generate the degraded speech signal **214**.

The acoustic channel simulator **220** may be configured to iteratively train the first CNN **230** multiple times for each recognition speech signal of multiple recognition speech signals, changing noise characteristics for each iteration, or to successively train the first CNN **230** using a plurality of recognition speech signals, each recognition speech signal being processed only once, but modifying at least one noise characteristic for each recognition speech sample. For example, as described above, for each iteration one or more characteristics of environmental noise, reverberation, acquisition device noise and/or transcoding noise may be modified in order to broaden the intra-speaker variability.

Once the acoustic channel simulator **220** has generated the degraded speech signal **214**, there are two ways to use it: the first is during the offline training of the speaker recognition system, while the second is during speaker enrollment and speaker testing. The former uses the degraded speech signal to train features or universal background models that are not resilient to such channel variability, while the latter uses the degraded speech signal to enrich a speaker model or the test utterance with all possible channel conditions.

Returning to **FIG. 2B**, after the first CNN **230** is trained, the test and enrollment system **200B** is in a test and enrollment of recognition speech signals. The acoustic channel simulator **220**, signal analyzer **240** and loss function processor **250** (each shown in dotted lines) need not be further used. That is, the trained first CNN **230** may receive a recognition speech signal **212** from input **210** transparently passed through a dormant acoustic channel simulator **220**, and may produce channel-compensated low-level features **232** for use by the remainder of a speaker recognition subsystem **20** as passed transparently through a dormant loss function processor **250**. Alternatively, as illustrated in **FIG. 2C**, a trained channel-compensation CNN **230** may be used alone in instances where further training would be unwarranted or rare.

The feed forward convolutional neural network **230** illustrated in **FIGs. 2A-C** is trained to create a new set of features that are both robust to channel variability and relevant to discriminate between speakers. To achieve the first goal, the trained, channel-compensated CNN **230** takes as input the degraded speech signal described above and generates as output "clean" or channel-compensated features that matches handcrafted features extracted by signal analyzer **240** from a non-degraded recognition speech signal. The handcrafted features could be, for example, MFCC (Mel frequency cepstrum coefficients), LFCC (linear frequency cepstrum coefficients), PLP (Perceptual Linear Predictive), MFB (Mel-Filter Bank) or CQCC (constant Q cepstral coefficient). Specifically, "handcrafted features" may refer to features for parameters such as windows size, number of filters, etc. were tuned by manual trial and error, often over a number of years. **FIG. 2A** illustrates the training process.

The configuration of CNN **230** may include an input layer, a plurality of convolutional layers, a Log layer, and an output layer. In a non-limiting embodiment, the input layer may be configured to expect a raw signal (e.g., recognition speech signal) of 110 milliseconds that corresponds to 880 samples (assuming that the sampling rate is 8 kHz). In some embodiments six convolutional layers may be utilized, with six corresponding max-pooling layers, each using rectified linear unit (ReLu) activation. For example convolutional layers may have a configuration as shown in Table 1 below.

| Table 1 | | | |
|---|---|---|---|
| | | | |

| | **Convolutional layer** | | **Max Pooling Layer** |
|---|---|---|---|
| | ***Number of filters*** | ***Filter Size*** | ***Stride*** |
| 1 | 16 | 11 | 5 |
| 2 | 32 | 7 | 2 |
| 3 | 32 | 7 | 2 |
| 4 | 32 | 7 | 2 |
| 5 | 32 | 7 | 2 |
| 6 | 32 | 7 | 11 |

The Log layer may be an element-wise Log layer (log(*X* + 0.01)), where *X* is greater than zero (*X* > 0). The inventors determined that inclusion of the Log Layer provides lower loss values, and higher speaker recognition accuracy. The offset (0.01) is included to avoid extreme cases (e.g., where log(*X*) = -∞) as *X* approaches zero. The output layer may include twenty output units that correspond to the dimension of desired acoustic features (e.g., MFCC or CQCC). In at least one embodiment, batch normalization is applied to each convolutional layer. It will be acknowledged by those of ordinary skill in the art that the number and configuration of convolutional and max pooling layers may be varied to achieve different results.

In experimental results, the acoustic features resulting from the above CNN configuration were applied to a Gaussian Mixture Model (GMM) speaker recognition system and the recognition results compared with the same system employing baseline MFCC features. Results indicated significant improvement, with a 52% relative drop in equal error rate (EER) over the same system employing baseline MFCC features.

The signal analyzer **240** in **FIG. 2A** may be configured to perform spectral or cepstral analysis to produce handcrafted acoustic features, e.g., coefficients for MFCC, constant Q cepstral coefficients (CQCC), Low Frequency Cepstral Coefficients (LFCC) or the like. These handcrafted features are evaluated against the channel-compensated low-level features from the CNN **230** by the Loss function processor **250.**

The loss function processor **250** receives the channel-compensated low-level features **232** and the handcrafted acoustic features **242** and calculates a loss result **252**. The loss function employed by the loss function processor **250** may include a mean squared error function. However, it will be acknowledged by those having skill in the art that other loss functions could be employed. As noted above, the loss result **252** may be used to update connection weights for nodes of the first CNN **230** when the loss result is greater than a predetermined threshold. If the loss result is less than or equal to the threshold, the training is complete. If all iterations of training are completed without satisfying the threshold, the training may be considered failed for the training set of recognition speech signals.

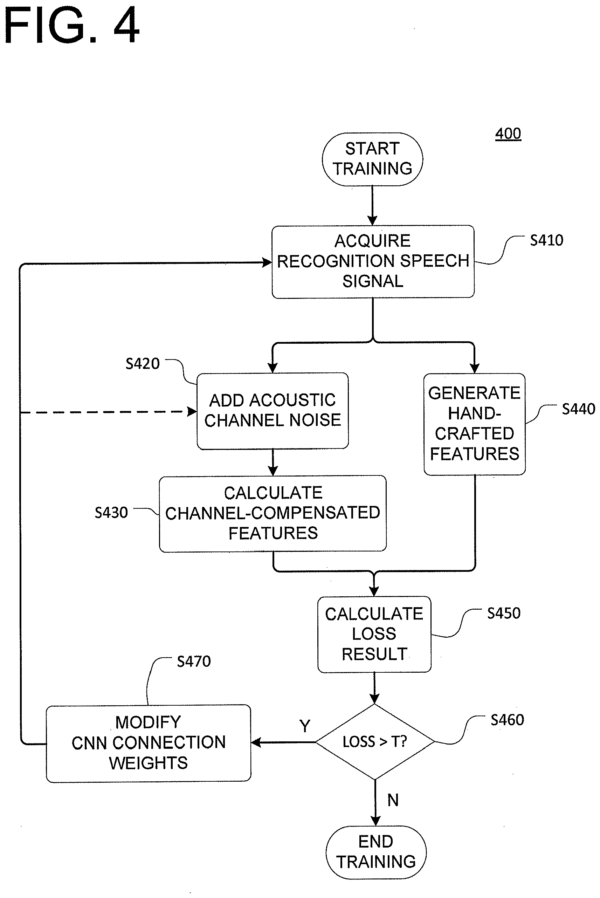

**FIG. 4** is a flowchart for a training operation or method **400** for training a channel-compensated feed forward convolutional neural network (e.g., **230**) according to exemplary embodiments of the present disclosure. The training operation **400** includes an operation for acquiring a recognition speech signal (**S410**). The recognition speech signal (e.g., **212** in prior figures) may be obtained from a set of recognition speech signals previously stored (e.g., in memory **24**), obtained from an audio acquisition device such as a microphone or set of microphones, or from a remote source such as a repository having one or more speaker recognition data sets. In the latter case, recognition speech signals may be obtained from a plurality of repositories. The recognition speech signal may include raw audio recordings.

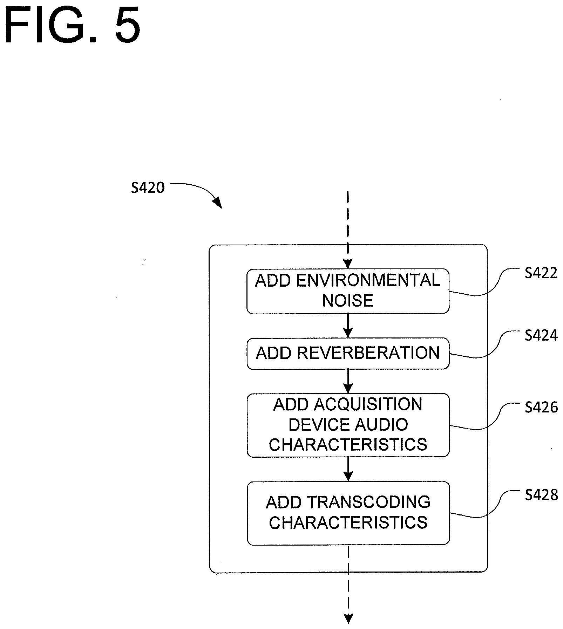

In operation **S420**, acoustic channel noise is added to the recognition speech signal to produce a degraded speech signal (such as degraded speech signal **214** in previous figures). Operation **S420** is described in greater detail below with respect to **FIG. 5**. In operation **S430**, channel-compensated features are generated from the degraded speech signal by a first feed forward convolutional neural network (such as CNN **230** in previous figures). In operation **S440**, handcrafted features (e.g., coefficients of at least one of MFCC, LFCC, PLP, etc.) are derived from the recognition speech signal according to conventional methods. In operation **S450**, a loss result is calculated from the channel-compensated features and the handcrafted features. In some exemplary embodiments, a mean squared error function may be used for satisfactory results. However, it is acknowledged that other loss functions may be employed.

In operation **S460** the loss result is compared with a threshold loss. If the calculated loss if less than or equal to the threshold, the method **400** is complete, and the channel compensated feed forward convolutional neural network is considered trained with respect to the speech signals provided. However, if the calculated loss is greater than the threshold, the calculated loss is used to modify connection weights (**S470**) of the first (i.e., channel compensating) CNN, and the method **400** is performed again using a new recognition speech signal and/or changed parameters for the acoustic channel noise. In some embodiments, (see solid arrow to **S410** from **S470**) training of the CNN may include several passes using all recognition speech signals, each pass using a different acoustic channel noise configuration. In other embodiments (see dashed arrow to **S420**) each recognition speech signal may be processed iteratively until all desired acoustic channel noise configurations are considered before processing a next recognition speech signal. In yet other embodiments, recognition speech signals may be processed serially, each recognition speech signal using a different acoustic channel noise configuration.

Those having skill in the art will recognize that the threshold comparison at operation **S460** may alternatively consider training complete when the calculated loss is less than the threshold, and incomplete when the calculated loss is greater than or equal to the threshold.

**FIG. 5** is a flowchart providing additional detail to operation **S420** to add channel noise in the method **400** of **FIG. 4**. In operation **S422**, a recognition speech signal may be modified to include environmental or background noise according to a configuration using one or more selectable noise types at one or more respective signal-to-noise ratios (SNRs), (e.g., as described above with respect to noise simulator **310** in **FIG. 3**). In operation **S424** a resulting modified speech signal may be further modified to include reverberation according to a configuration using one or more times-to-reverberation at 60dB ((T60, e.g., as described above with respect to reverberation simulator **312** in **FIG. 3**). In operation **S426** the further modified speech signal may be yet further modified to include audio acquisition device characteristics e.g., audio artifacts, corresponding to one or more acquisition devices (e.g., microphone, telephone, etc.) in different modes (e.g., as described above with respect to acquisition device simulator **314** in **FIG. 3**). Similarly, the signal resulting from adding acquisition device audio characteristics may be further modified at operation **S428** to selectively include transcoding characteristics corresponding to one or more audio channels. For example, an audio channel may utilize one or more audio compression codecs that introduce loss of audio fidelity, and the effects of one or more such codecs may be applied to the speech signal, e.g., as described above with respect to transcoding noise simulator **316** in **FIG. 3**.

As noted above, in some embodiments each recognition speech signal for training may be iteratively processed with per-iteration modification(s) to the acoustic channel noise configuration. The result of the acoustic channel noise adding operation **S420** is a degraded speech signal appropriate for training a convolutional neural network to compensate for channel and background noise.

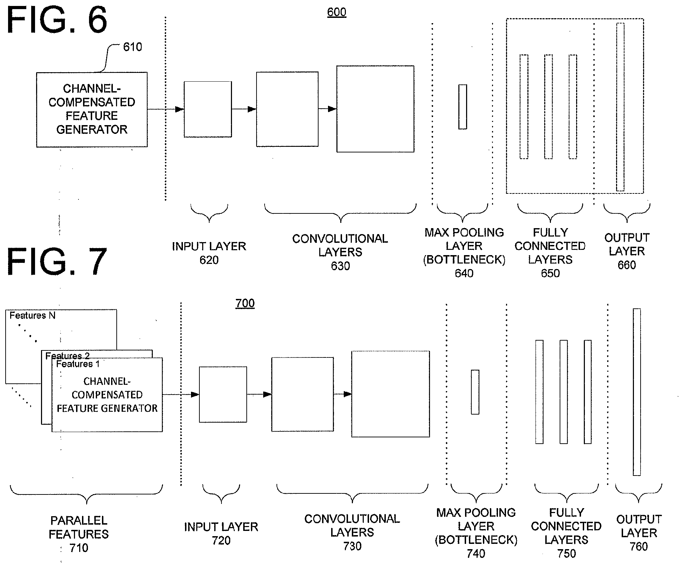

It is desirable to generate acoustic features that are not only channel robust, as is addressed by the systems described above, but also increase the inter-speaker variability and decrease the intra-speaker variability. To do so, the inventors put in cascade the pre-trained channel-compensated CNN model described above (e.g., systems **200A-200C**) with a second CNN that is speaker-aware. The second neural network model **600** is illustrated in **FIG. 6****.**

The second neural network model **600** includes, in addition to the channel compensated feature generator **610** (such as systems **200A-200C** detailed above), a convolutional neural network having an input layer **620**, convolutional layers **630**, and a max pooling layer **640** that outputs bottleneck features. For training, the second neural network model **600** may additionally include one or more fully connected layers **650** and an output layer **660**. An input layer may be two-dimensional, having a first dimension corresponding to an audio sample length (e.g., 110 milliseconds) and a second dimension corresponding to the number of acoustic features (i.e. feature vectors) from the channel compensated feature generator **610** (e.g., CNN **230**). In some embodiments, two convolutional layers **620** may employed, utilizing a scaled tanh activation and respectively having number and size of filters of (32,(15, 20)) and (64, (3, 1)). (E.g., 32 filters of size 15 x 20.) The max pooling layer **640** operates over the time axis and its output is denoted as bottleneck features. The fully connected layers **650** may include 256 hidden units each and, like the convolutional layer may utilize scaled tanh for activation. The output layer **660** may have 3622 output units, each output unit corresponding to a single particular speaker in training data. Naturally, the system may be scaled to accommodate a different number of speakers. To avoid overfitting, a dropout technique may be used in the fully connected layers **650** and output layer **660**, instead of, e.g., batch normalization. In an exemplary embodiment a dropout ratio may be about 30%.

Bottleneck features are a set of activations of nodes over time from a bottleneck layer in a trained deep neural network (DNN). The bottleneck layer is a hidden layer in the DNN of reduced dimension relative to the other layers (e.g., 3 nodes compared to 20). This DNN can be trained to discriminate between different output classes such as senones, speakers, conditions, etc. Using a bottleneck layer in the DNN ensures that all information required to ultimately determine the posteriors at the DNN's output layer is restrained to a small number of nodes. (*See* Ferrer, et al., "Exploring the Role of Phonetic Bottleneck Features for Speaker and Language Recognition", 2016 IEEE International Conference on Acoustics, Speech and Signal Processing (ICASSP), 5575-5579.)

When the bottleneck features are applied in classifying a particular speech signal under test against models (e.g., Gaussian Mixture Model), the loss function to minimize for classification is categorical Cross-Entropy. While the fully-connected layers **650** and the output layer **660** are used for training, they are discarded at test and enrollment times as noted above, as only the trained CNN network need be used to extract bottleneck features that could be used independently of the back-end classifier (i.e., the fully connected layers **650** and output layer **660**).

**FIG. 7** is a block diagram of a speaker recognition system employing a plurality of feature generators **710** to input, in parallel to second neural network **700**, Feature sets 1 to N. Features 1 to N (**710**) may include any of various handcrafted and learned features, such as MFCCs, LFCCs, filter-banks and glottal features, which were historically designed to address speaker recognition problems, as well as channel-compensated features discussed above. The improved results of such technique compared to a classical score fusion technique may be about 10%. Another advantage is that, compared with score fusion schemes, which requires scores from two or more system, the disclosed multi-DNN front end implements a single, standalone system, thus, reducing computational and development costs.

The second neural network **700** corresponds to the second neural network **600** described above with respect to **FIG. 6**, and is thus not described again. However, as input the second neural network **700** may receive a plurality of acoustic features sets in addition to channel compensated features from a channel-compensated feature generator **710** (such as systems **200A-200C** discussed in detail above).

A possible architecture is thus similar to that of **FIG. 6** but with three-dimensional input instead of two-dimensional input, where the third dimension defines the feature type.

In the preceding detailed description, various specific details are set forth in order to provide an understanding of the creation and use of channel compensated low-level features for speaker recognition, and describe the apparatuses, techniques, methods, systems, and computer-executable software instructions introduced here. However, the techniques may be practiced without the specific details set forth in these examples. Various alternatives, modifications, and/or equivalents will be apparent to those skilled in the art without varying from the introduced apparatuses and techniques. For example, while the embodiments described herein refer to particular features, the scope of this solution also includes embodiments having different combinations of features and embodiments that do not include all of the described features. Accordingly, the scope of the techniques and solutions introduced herein are intended to embrace all such alternatives, modifications, and variations as fall within the scope of the claims, together with all equivalents thereof. Therefore, the description should not be taken as limiting the scope of the invention, which is defined by the claims.

The present invention and particularly the speaker recognition subsystem **20** generally relates to an apparatus for performing the operations described herein. This apparatus may be specially constructed for the required purposes such as a graphics processing unit (GPU), digital signal processor (DSP), application specific integrated circuit (ASIC), field programmable gate array (FPGA) special purpose electronic circuit, or it may comprise a general-purpose computer selectively activated or reconfigured by a computer program stored in the computer. Such a computer program may be stored in a computer readable storage medium, such as, but is not limited to, any type of disk including optical disks, CD-ROMs, magneto-optical disks, read-only memories (ROMs), random access memories (RAMs), EPROMs, EEPROMs, magnetic or optical cards, integrated memory, "cloud" storage, or any type of computer readable media suitable for storing electronic instructions.

The algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description herein. In addition, the present invention is not described with reference to any particular programming language. It will be appreciated that a variety of programming languages may be used to implement the teachings of the invention as described herein.

Terms and phrases used in this document, and variations thereof, unless otherwise expressly stated, should be construed as open ended as opposed to limiting. As examples of the foregoing: the term "including" should be read to mean "including, without limitation" or the like; the term "example" is used to provide exemplary instances of the item in discussion, not an exhaustive or limiting list thereof; and adjectives such as "conventional," "traditional," "standard," "known" and terms of similar meaning should not be construed as limiting the item described to a given time period or to an item available as of a given time, but instead should be read to encompass conventional, traditional, normal, or standard technologies that may be available or known now or at any time in the future. Likewise, a group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should also be read as "and/or" unless expressly stated otherwise. Furthermore, although item, elements or components of the disclosure may be described or claimed in the singular, the plural is contemplated to be within the scope thereof unless limitation to the singular is explicitly stated. The presence of broadening words and phrases such as "one or more," "at least," "but not limited to" or other like phrases in some instances shall not be read to mean that the narrower case is intended or required in instances where such broadening phrases may be absent. Additionally, where a range is set forth, the upper and lower limitations of the range are inclusive of all of the intermediary units therein.

The previous description of the disclosed exemplary embodiments is provided to enable any person skilled in the art to make or use the present invention. Various modifications to these exemplary embodiments will be readily apparent to those skilled in the art, and the generic principles defined herein may be applied to other embodiments without departing from scope of the invention. Thus, the present invention is not intended to be limited to the embodiments shown herein but is to be accorded the widest scope consistent with the principles and novel features disclosed herein.

## Claims

1. A system for generating channel-compensated low level features for speaker recognition, the system comprising:
an acoustic channel simulator (220) configured to receive a recognition speech signal, degrade the recognition speech signal to include changing characteristics of an audio channel for each training iteration of a plurality of training iterations for the recognition speech signal, and output degraded speech signals corresponding to the recognition speech signal for the plurality of training iterations;
a first convolutional neural network (230) configured, in a training mode, to receive the degraded speech signals, and to compute from each of the degraded speech signals a plurality of channel-compensated low-level features, and further configured, in a test and enrollment mode, to receive the recognition speech signal, to calculate from the recognition speech signal a second plurality of channel-compensated low-level features;
a speech signal analyzer (240) configured, in the training mode, to extract features of the recognition speech signal;
a loss function processor (250) configured to calculate a loss based on the features from the speech analyzer and the channel-compensated low-level features of each of the degraded speech signals from the first convolutional neural network;
wherein, the calculated loss at each of the plurality of training iterations is lowered by modifying one or more connection weights of the first feed forward convolutional neural network, and
if the calculated loss is less than or equal to a threshold loss, or a maximum number of training iterations has been met, the training mode is terminated.

2. The system according to claim 1, wherein the acoustic channel simulator (220) comprises an environmental noise simulator (310), a reverberation simulator (312), an audio acquisition device characteristic simulator (314), and a transcoding noise simulator (316), each selectably or programmatically configurable to perform a portion of said degradation of the recognition speech signal.

3. The system according to claim 2, wherein the environmental noise simulator (310) introduces to the recognition speech signal at least one environmental noise type selected from a plurality of environmental noise types.

4. The system according to claim 3, wherein the environmental noise simulator (310) introduces the at least one selected environmental noise type at a signal-to-noise ratio (SNR) selected from a plurality of signal-to-noise ratios (SNRs).

5. The system according to any one of claims 2-4, wherein the reverberation simulator (312) is configured to simulate reverberation according to a direct-to-reverberation ratio (DRR) selected from a plurality of DRRs.

6. The system according to claim 5, wherein each DRR in the plurality of DRRs has a corresponding time-to-reverberation at 60dB.

7. The system according to any one of claims 2-6, wherein the audio acquisition device characteristic simulator (314) simulates audio characteristics of an audio acquisition device selectable from a plurality of stored audio acquisition device profiles each having one or more selectable audio characteristics.

8. The system according to claim 7, wherein each audio acquisition device profile includes at least one of: a frequency/equalization characteristic, an amplitude characteristic, a filtering characteristic, an electrical noise characteristic, and a physical noise characteristic.

9. The system according to any one of claims 2-8, wherein the transcoding noise simulator (316) is configured to selectively add audio channel transcoding characteristics selectable from a plurality of stored transcoding characteristic profiles.

10. The system according to claim 9, wherein each transcoding characteristic profile includes at least one of a quantization error noise characteristic, a sampling rate audio artifact characteristic, and a data compression audio artifact characteristic.

11. The system according to any one of claims 1-10, further comprising a second, speaker-aware, convolutional neural network configured, in the test and enrollment mode, to receive the plurality of channel-compensated features of each of the degraded speech signals, and to extract from the channel-compensated features a plurality of speaker-aware bottleneck features.

12. The system according to claim 11, wherein the second convolutional neural network includes a plurality of convolutional layers and a bottleneck layer, the bottleneck layer configured to output the speaker-aware bottleneck features.

13. The system according to claim 11, wherein the second convolutional neural network takes as input at least one set of other features side by side with the plurality of channel-compensated features of each of the degraded speech signals, the at least one set of other features extracted from the recognition speech signal.

14. A computer-implemented method of training a deep neural network (DNN) with channel-compensated low-level features (400), the method comprising:
receiving a recognition speech signal (s410);
degrading the recognition speech signal to produce a plurality of channel-compensated speech signals to include changing characteristics of an audio channel for a plurality of training iterations for the recognition speech signal;
extracting, using a first convolutional neural network, in a training mode, a plurality of low-level features from each of the plurality of channel-compensated speech signals;
calculating (s450) a loss result using the channel-compensated low-level features extracted from each of the plurality of channel-compensated speech signal and hand-crafted features extracted from the recognition speech signal at each of the plurality of training iterations for the recognition speech signal;
modifying (s470) connection weights of the first feed forward convolutional neural network to lower the calculated loss result at each of the plurality of training iterations for the recognition speech signal; and
terminating the training mode if the calculated loss is less than or equal to a threshold loss, or a maximum number of training iterations has been met.

15. The method according to claim 14, wherein said degrading the recognition speech signal includes selectively or programmatically adding one or more of environmental noise, reverberation, an audio acquisition device characteristic, and an audio channel transcoding artifact.

## Patentansprüche

1. Ein System zum Erzeugen von kanalkompensierten Low-Level-Merkmalen zur Sprechererkennung, wobei das System Folgendes beinhaltet:
einen Akustikkanal-Simulator (220), der konfiguriert ist, um ein Erkennungssprachsignal zu empfangen, das Erkennungssprachsignal zu degradieren, um sich ändernde Eigenschaften eines Audiokanals für jeden Trainingsdurchlauf einer Vielzahl von Trainingsdurchläufen für das Erkennungssprachsignal zu umfassen, und degradierte Sprachsignale, die dem Erkennungssprachsignal für die Vielzahl von Trainingsdurchläufen entsprechen, auszugeben;
ein erstes konvolutionelles neuronales Netzwerk (230), das konfiguriert ist, um in einem Trainingsmodus die degradierten Sprachsignale zu empfangen und von jedem der degradierten Sprachsignale eine Vielzahl von kanalkompensierten Low-Level-Merkmalen zu berechnen, und das ferner konfiguriert ist, um in einem Prüf- und
Anmeldemodus das Erkennungssprachsignal zu empfangen, um von dem Erkennungssprachsignal eine zweite Vielzahl von kanalkompensierten Low-Level-Merkmalen zu errechnen;
einen Sprachsignal-Analysator (240), der konfiguriert ist, um in dem Trainingsmodus Merkmale des Erkennungssprachsignals zu extrahieren;
einen Verlustfunktions-Prozessor (250), der konfiguriert ist, um einen Verlust basierend auf den Merkmalen von dem Sprachanalysator und den kanalkompensierten Low-Level-Merkmalen jedes der degradierten Sprachsignale von dem ersten konvolutionellen neuronalen Netzwerk zu errechnen;
wobei der errechnete Verlust bei jedem der Vielzahl von Trainingsdurchläufen durch Modifizieren eines oder mehrerer Verbindungsgewichte des ersten konvolutionellen neuronalen Feed-Forward-Netzwerks gesenkt wird und,
wenn der errechnete Verlust kleiner als ein oder gleich einem Verlustschwellenwert ist oder eine maximale Anzahl von Trainingsdurchläufen erreicht worden ist, der Trainingsmodus beendet wird.

2. System gemäß Anspruch 1, wobei der Akustikkanal-Simulator (220) einen Umgebungsrausch-Simulator (310), einen Nachhall-Simulator (312), einen Simulator für Audioerfassungsvorrichtungs-Eigenschaften (314) und einen Transkodierungsrausch-Simulator (316) beinhaltet, die jeweils auswählbar oder programmatisch dazu konfigurierbar sind, einen Teil der Degradation des Erkennungssprachsignals durchzuführen.

3. System gemäß Anspruch 2, wobei der Umgebungsrausch-Simulator (310) in das Erkennungssprachsignal mindestens einen Umgebungsrausch-Typ einbringt, der aus einer Vielzahl von Umgebungsrausch-Typen ausgewählt ist.

4. System gemäß Anspruch 3, wobei der Umgebungsrausch-Simulator (310) den mindestens einen ausgewählten Umgebungsrausch-Typ mit einem Signal-zu-RauschVerhältnis (Signal-To-Noise Ratio, SNR) einbringt, das aus einer Vielzahl von Signalzu-Rausch-Verhältnissen (SNRs) ausgewählt ist.

5. System gemäß einem der Ansprüche 2-4, wobei der Nachhall-Simulator (312) konfiguriert ist, um Nachhall gemäß einem Direktschall-zu-Nachhall-Verhältnis (Direct-To-Reverberation Ratio, DRR) zu simulieren, das aus einer Vielzahl von DRRs ausgewählt ist.

6. System gemäß Anspruch 5, wobei jedes DRR in der Vielzahl von DRRs eine entsprechende Zeit-zu-Nachhall bei 60dB aufweist.

7. System gemäß einem der Ansprüche 2-6, wobei der Simulator für Audioerfassungsvorrichtungs-Eigenschaften (314) Audioeigenschaften einer Audioerfassungsvorrichtung simuliert, die aus einer Vielzahl von gespeicherten Audioerfassungsvorrichtungs-Profilen, die jeweils eine oder mehrere auswählbare Audioeigenschaften aufweisen, auswählbar sind.

8. System gemäß Anspruch 7, wobei jedes Audioerfassungsvorrichtungs-Profil mindestens eines von Folgendem umfasst: einer Frequenz-/Entzerrungseigenschaft, einer Amplitudeneigenschaft, einer Filterungseigenschaft, einer Eigenschaft elektrischen Rauschens und einer Eigenschaft physikalischen Rauschens.

9. System gemäß einem der Ansprüche 2-8, wobei der Transkodierungsrausch-Simulator (316) konfiguriert ist, um Audiokanal-Transkodierungs-Eigenschaften, die aus einer Vielzahl von gespeicherten Transkodierungseigenschafts-Profilen auswählbar sind, auswählbar hinzuzufügen.

10. System gemäß Anspruch 9, wobei jedes Transkodierungseigenschafts-Profil mindestens eines von einer Eigenschaft von Quantisierungsfehlerrauschen, einer Abtastraten-Audioartefakt-Eigenschaft und einer Datenkompressions-Audioartefakt-Eigenschaft umfasst.

11. System gemäß einem der Ansprüche 1-10, das ferner ein zweites, sprecherbewusstes, konvolutionelles neuronales Netzwerk beinhaltet, das konfiguriert ist, um in dem Prüf- und Anmeldemodus die Vielzahl von kanalkompensierten Merkmalen jedes der degradierten Sprachsignale zu empfangen und aus den kanalkompensierten Merkmalen eine Vielzahl von sprecherbewussten Bottleneck-Merkmalen zu extrahieren.

12. System gemäß Anspruch 11, wobei das zweite konvolutionelle neuronale Netzwerk eine Vielzahl von konvolutionellen Schichten und eine Bottleneck-Schicht umfasst, wobei die Bottleneck-Schicht konfiguriert ist, um die sprecherbewussten Bottleneck-Merkmale auszugeben.

13. System gemäß Anspruch 11, wobei das zweite konvolutionelle neuronale Netzwerk mindestens einen Satz anderer Merkmale Seite an Seite mit der Vielzahl von kanalkompensierten Merkmalen jedes der degradierten Sprachsignale als Eingabe nimmt, wobei der mindestens eine Satz anderer Merkmale aus dem Erkennungssprachsignal extrahiert ist.

14. Ein rechnerimplementiertes Verfahren zum Trainieren eines tiefen neuronalen Netzwerks (Deep Neural Network, DNN) mit kanalkompensierten Low-Level-Merkmalen (400), wobei das Verfahren Folgendes beinhaltet:
Empfangen eines Erkennungssprachsignals (s410);
Degradieren des Erkennungssprachsignals, um eine Vielzahl von kanalkompensierten Sprachsignalen herzustellen, um sich ändernde Eigenschaften eines Audiokanals für eine Vielzahl von Trainingsdurchläufen für das Erkennungssprachsignal zu umfassen;
Extrahieren, unter Verwendung eines ersten konvolutionellen neuronalen Netzwerks, in einem Trainingsmodus einer Vielzahl von Low-Level-Merkmalen aus jedem der Vielzahl von kanalkompensierten Sprachsignalen;
Errechnen (s450) eines Verlustergebnisses unter Verwendung der kanalkompensierten Low-Level-Merkmale, die aus jedem der Vielzahl von kanalkompensierten Sprachsignalen extrahiert worden sind, und handgefertigter Merkmale, die aus dem Erkennungssprachsignal bei jedem der Vielzahl von Trainingsdurchläufen für das Erkennungssprachsignal extrahiert worden sind; und
Modifizieren (s470) von Verbindungsgewichten des ersten konvolutionellen neuronalen Feed-Forward-Netzwerks, um das errechnete Verlustergebnis bei jedem der Vielzahl von Trainingsdurchläufen für das Erkennungssprachsignal zu senken; und
Beenden des Trainingsmodus, wenn der errechnete Verlust kleiner als ein oder gleich einem Verlustschwellenwert ist oder eine maximale Anzahl von Trainingsdurchläufen erreicht worden ist.

15. Verfahren gemäß Anspruch 14, wobei das Degradieren des Erkennungssprachsignals das auswählbare oder programmatische Hinzufügen eines oder mehrerer von Umgebungsrauschen, Nachhall, einer Audioerfassungsvorrichtungs-Eigenschaft und einem Audiokanal-Transkodierungsartefakt umfasst.

## Revendications

1. Un système pour la génération d'attributs de bas niveau à compensation de canal pour la reconnaissance du locuteur, le système comprenant :
un simulateur de canal acoustique (220) configuré pour recevoir un signal de parole de reconnaissance, dégrader le signal de parole de reconnaissance de façon à inclure des caractéristiques variables d'un canal audio pour chaque itération d'entraînement d'une pluralité d'itérations d'entraînement pour le signal de parole de reconnaissance, et
délivrer des signaux de parole dégradés correspondant au signal de parole de reconnaissance pour la pluralité d'itérations d'entraînement ;
un premier réseau de neurones convolutif (230) configuré, dans un mode d'entraînement, pour recevoir les signaux de parole dégradés, et pour calculer à partir de chacun des signaux de parole dégradés une pluralité d'attributs de bas niveau à compensation de canal, et configuré en outre, dans un mode de test et
d'enregistrement, pour recevoir le signal de parole de reconnaissance, pour calculer à partir du signal de parole de reconnaissance une deuxième pluralité d'attributs de bas niveau à compensation de canal ;
un analyseur de signal de parole (240) configuré, dans le mode d'entraînement, pour extraire des attributs du signal de parole de reconnaissance ;
un processeur de fonction de perte (250) configuré pour calculer une perte sur la base des attributs provenant de l'analyseur de parole et des attributs de bas niveau à compensation de canal de chacun des signaux de parole dégradés provenant du premier réseau de neurones convolutif ;
dans lequel, la perte calculée à chaque itération de la pluralité d'itérations d'entraînement est abaissée par modification d'un ou de plusieurs poids de connexion du premier réseau de neurones convolutif à propagation avant, et
si la perte calculée est inférieure ou égale à une perte seuil, ou si un nombre maximal d'itérations d'entraînement a été atteint, le mode d'entraînement est terminé.

2. Le système selon la revendication 1, dans lequel le simulateur de canal acoustique (220) comprend un simulateur de bruit ambiant (310), un simulateur de réverbération (312), un simulateur de caractéristiques de dispositif d'acquisition audio (314), et un simulateur de bruit de transcodage (316), chacun d'eux étant configurable par sélection ou par programmation pour effectuer une partie de ladite dégradation du signal de parole de reconnaissance.

3. Le système selon la revendication 2, dans lequel le simulateur de bruit ambiant (310) introduit dans le signal de parole de reconnaissance au moins un type de bruit ambiant sélectionné parmi une pluralité de types de bruit ambiant.

4. Le système selon la revendication 3, dans lequel le simulateur de bruit ambiant (310) introduit l'au moins un type de bruit ambiant sélectionné à un rapport signal/bruit (SNR) sélectionné parmi une pluralité de rapports signal/bruit (SNR).

5. Le système selon n'importe laquelle des revendications 2 à 4, dans lequel le simulateur de réverbération (312) est configuré pour simuler une réverbération selon un rapport son direct/son réverbéré (DRR) sélectionné parmi une pluralité de DRR.

6. Le système selon la revendication 5, dans lequel chaque DRR de la pluralité de DRR a un temps de réverbération à 60 dB correspondant.

7. Le système selon n'importe laquelle des revendications 2 à 6, dans lequel le simulateur de caractéristiques de dispositif d'acquisition audio (314) simule des caractéristiques audio d'un dispositif d'acquisition audio sélectionnables parmi une pluralité de profils de dispositif d'acquisition audio stockés ayant chacun une ou plusieurs caractéristiques audio sélectionnables.

8. Le système selon la revendication 7, dans lequel chaque profil de dispositif d'acquisition audio inclut au moins une caractéristique parmi : une caractéristique de fréquence/d'égalisation, une caractéristique d'amplitude, une caractéristique de filtrage, une caractéristique de bruit électrique, et une caractéristique de bruit physique.

9. Le système selon n'importe laquelle des revendications 2 à 8, dans lequel le simulateur de bruit de transcodage (316) est configuré pour additionner sélectivement des caractéristiques de transcodage de canal audio sélectionnables parmi une pluralité de profils de caractéristiques de transcodage stockés.

10. Le système selon la revendication 9, dans lequel chaque profil de caractéristiques de transcodage inclut au moins une caractéristique parmi une caractéristique de bruit d'erreur de quantification, une caractéristique d'artéfacts audio de cadence d'échantillonnage, et une caractéristique d'artéfacts audio de compression de données.

11. Le système selon n'importe laquelle des revendications 1 à 10, comprenant en outre un deuxième réseau de neurones convolutif, sensible au locuteur, configuré, dans le mode de test et d'enregistrement, pour recevoir la pluralité d'attributs à compensation de canal de chacun des signaux de parole dégradés, et pour extraire des attributs à compensation de canal une pluralité d'attributs de goulot d'étranglement sensibles au locuteur.

12. Le système selon la revendication 11, dans lequel le deuxième réseau de neurones convolutif inclut une pluralité de couches convolutives et une couche de goulot d'étranglement, la couche de goulot d'étranglement étant configurée pour délivrer les attributs de goulot d'étranglement sensibles au locuteur.

13. Le système selon la revendication 11, dans lequel le deuxième réseau de neurones convolutif prend comme entrée au moins un ensemble d'autres attributs côte à côte avec la pluralité d'attributs à compensation de canal de chacun des signaux de parole dégradés, l'au moins un ensemble d'autres attributs étant extraits du signal de parole de reconnaissance.

14. Un procédé mis en œuvre par ordinateur pour l'entraînement d'un réseau de neurones profond (DNN) avec des attributs de bas niveau à compensation de canal (400), le procédé comprenant :
la réception d'un signal de parole de reconnaissance (s410) ;
la dégradation du signal de parole de reconnaissance pour produire une pluralité de signaux de parole à compensation de canal de façon à inclure des caractéristiques variables d'un canal audio pour une pluralité d'itérations d'entraînement pour le signal de parole de reconnaissance ;
l'extraction, en utilisant un premier réseau de neurones convolutif, dans un mode d'entraînement, d'une pluralité d'attributs de bas niveau de chaque signal de la pluralité de signaux de parole à compensation de canal ;
le calcul (s450) d'un résultat de perte en utilisant les attributs de bas niveau à compensation de canal extraits de chaque signal de la pluralité de signaux de parole à compensation de canal et d'attributs artisanaux extraits du signal de parole de reconnaissance à chaque itération de la pluralité d'itérations d'entraînement pour le signal de parole de reconnaissance ;
la modification (s470) de poids de connexion du premier réseau de neurones convolutif à propagation avant pour abaisser le résultat de perte calculée à chaque itération de la pluralité d'itérations d'entraînement pour le signal de parole de reconnaissance ; et
la terminaison du mode d'entraînement si la perte calculée est inférieure ou égale à une perte seuil, ou si un nombre maximal d'itérations d'entraînement a été atteint.

15. Le procédé selon la revendication 14, dans lequel ladite dégradation du signal de parole de reconnaissance inclut l'addition sélective ou par programmation d'un ou de plusieurs éléments parmi du bruit ambiant, de la réverbération, une caractéristique de dispositif d'acquisition audio, et un artéfact de transcodage de canal audio.
